Europäisches Patentamt

European Patent Office

Office européen des brevets

(19)

(11) EP 1 566 925 A2

(12) EUROPEAN PATENT APPLICATION

(43) Date of publication:
24.08.2005 Bulletin 2005/34

(51) Int Cl.$^7$: H04L 12/56

(21) Application number: 05003422.2

(22) Date of filing: 17.02.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 19.02.2004 KR 2004011161

(71) Applicant: SAMSUNG ELECTRONICS CO., LTD.
Gyeonggi-do (KR)

(72) Inventors:
• Lee, Kang-Gyu
Yeongtong-gu Suwon-si Gyeonggi-do (KR)

• Park, Sung-Wook
Yeongtong-gu Suwon-si Gyeonggi-do (KR)
• Chae, Sang-Hoon
Yeongtong-gu Suwon-si Gyeonggi-do (KR)
• Oh, Jin-Young
Yeongtong-gu Suwon-si Gyeonggi-do (KR)
• Na, Sang-Jun
Yeongtong-gu Suwon-si Gyeonggi-do (KR)

(74) Representative: Grünecker, Kinkeldey,
Stockmair & Schwanhäusser Anwaltssozietät
Maximilianstrasse 58
80538 München (DE)

(54) **Optimisation of packet header in an HSPDA network**

(57)    A method for improving the data processing speed in a mobile communication system employing a High Speed Downlink Packet Access (HSDPA) is provided. A data unit for the HSDPA services is generated by adding a field for identifying a destination logical channel to the header of the data unit and inserting a header padding field into the header, and transmitting the generated data unit.

FIG.1

EP 1 566 925 A2

**Description**

The present invention relates to a mobile communication system, and more particularly to a method for improving the data processing speed in a mobile communication system employing a High Speed Downlink Packet Access (HSDPA).

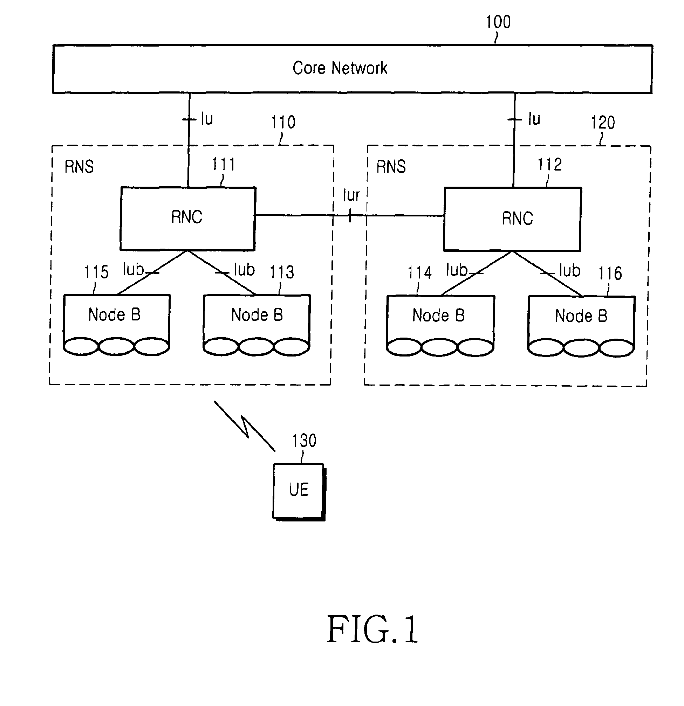

High Speed Downlink Packet Access (HSDPA) is a generic term used to describe the control channels associated with the High Speed-Downlink Shared Channels (HS-DSCHs) for supporting the high speed downlink packet transmission in W-CDMA communication systems, and in devices, systems and methods using these channels. A Hybrid Automatic Retransmission reQuest (HARQ) method has been proposed to support the HSDPA. The HARQ method and the structure of a conventional W-CDMA communication system will now be described with reference to Fig. 1.

Fig. 1 is a block diagram showing the structure of the conventional W-CDMA communication system.

The W-CDMA communication system includes a Core Network (CN) 100, a plurality of Radio Network Subsystems (RNS) 110 and 120 and User Equipment (UE) 130. Each of the RNSs 110 and 120 includes a Radio Network Controller (RNC) and a plurality of Node Bs (also referred to as base stations or cells). For example, the RNS 110 includes an RNC 111 and a plurality of Node Bs 113 and 115. RNCs are classified into a Serving RNC (SRNC), a Drift RNC (DRNC) or a Controlling RNC (CRNC) according to their roles. Specifically, the SNRC and the DRNC are classified according to the services they provide to the UE. That is, an RNC, which manages information of a UE and handles data communication between the UE and the core network, is referred to as an SRNC of the UE. When data of a UE is transmitted to and received from the SRNC of the UE via a different RNC, the different RNC is referred to as a DRNC of the UE. An RNC for controlling Node Bs is referred to as a CRNC of the Node Bs. In the example of Fig. 1, if the RNC 111 manages information of the UE 130, the RNC 111 is an SRNC of the UE 130, and if the UE 130 moves and communicates its data via the RNC 112, the RNC 112 is a DRNC of the UE 130. The RNC 111, which controls the Node B 113, is a CRNC of the Node B 113.

A description will now be given of the HARQ method, particularly the n-channel Stop And Wait Hybrid Automatic Retransmission reQuest (SAW HARQ) method. A general ARQ method is based on exchange of acknowledgement (ACK) and retransmission packet data between a UE and an RNC. To increase the transmission efficiency of the ARQ method, the HARQ method employs the Forward Error Correction (FEC) technique. In the HSDPA, an ACK and retransmission packet data are exchanged between the UE and the Node B. The HSDPA introduces the n-channel SAW HARQ method in which N processes are provided so that even when a specific process at a transmitting side has not received an ACK to its transmission, the packet data can be transmitted through other processes set in the transmitting side. The Stop And Wait Automatic Retransmission reQuest (SAW ARQ) method transmits the next packet data only after receiving an ACK to previously transmitted packet data. As a result the SAW ARQ method has low channel utilization. The n-channel SAW HARQ method can increase the channel utilization by allowing the other processes to consecutively transmit other packet data without receiving an ACK to the previous packet data. Specifically, in the n-channel SAW HARQ method, N processes are set between the UE and the Node B, and the transmitting side also transmits process identifiers allowing the receiving side to identify each process. Thus, the UE, which has received a plurality of packet data, can identify a process through which each of the plurality of packet data was transmitted so that the UE can afterwards perform operations corresponding to the identified process.

The layer architecture of the W-CDMA system employing the HSDPA described above requires an additional function for the HARQ in the Medium Access Control (MAC) layer. In order to satisfy this requirement, the layer architecture of the W-CDMA system employing the HSDPA has been modified from the conventional layer architecture of the W-CDMA system that does not employ the HSDPA. Specifically, the layer architecture of the W-CDMA system employing the HSDPA has implemented a Medium Access Control-high speed (MAC-hs) entity to support the HSDPA, in addition to the Medium Access Control-(MAC-c/sh) ("control/shared") and the Medium Access Control-MAC-d ("dedicated") entities in the MAC layer architecture of the conventional W-CDMA communication system.

The MAC-hs entity primarily provides functions for the HARQ on the High Speed-Downlink Shared Channel (HS-DSCH) to support the HSDPA. If no error is detected in a data block (i.e. packet data) received from a wireless channel, the MAC-hs entity transmits the ACK to the Node B. If an error is detected in the data block, the MAC-hs entity produces a Non ACKnowledgement (NACK) requesting retransmission of the data block and transmits the produced NACK to the Node B.

The MAC layer provides a service referred to as the "unacknowledged transfer of MAC SDU" to the upper layer. In this service, the MAC layer receives MAC Protocol Data Unit(s) (PDU(s)) from a physical layer (PHY) as its lower layer, and processes the received MAC PDU(s) to produce a MAC Service Data Unit(s) (SDU(s)), and then transfers the MAC SDU(s) (i.e. Radio Link Control (RLC) PDU(s)) in a suitable manner to the RLC layer as its upper layer. This description of the service takes into account only the downlink of the UE since the HSDPA service is associated with downlink in the present invention.

Channels used in the HSDPA communication system can be divided into downlink (DL) and uplink (UL) channels. Some examples of the downlink channel are a High Speed-Shared Control channel (HS-SCCH), an associated Dedicated Physical Channel (DPCH) and a High Speed-Physical Downlink Shared Channel (HS-PDSCH), and an example of the uplink channel is a High Speed-Dedicated Physical Control Channel (HS-DPCCH).

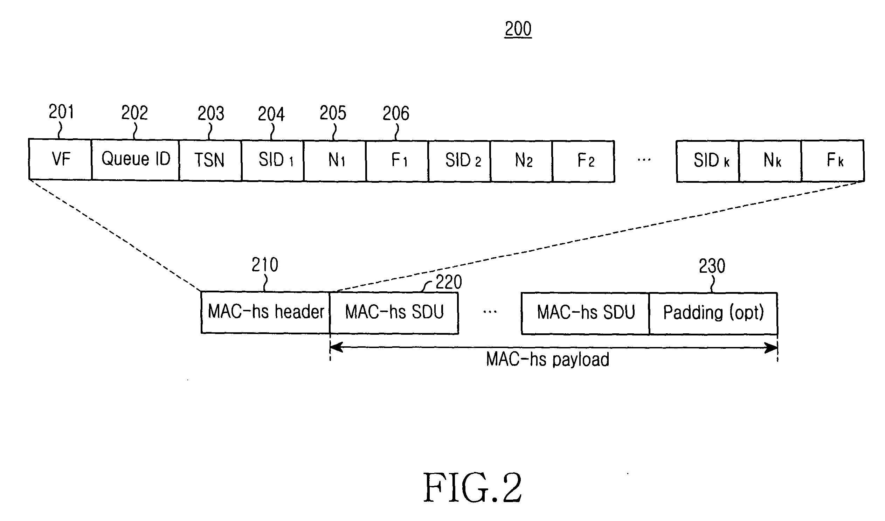

The HS-PDSCH is a physical channel supporting user traffic for HSDPA services, and the HS-DSCH is a transport channel (i.e. a channel for transferring MAC-PDU(s) between the PHY and the MAC layers) mapped to the physical channel. Actual user data carried through the HS-DSCH is referred to as a Medium Access Control-high speed Protocol Data Unit (MAC-hs PDU). The structure of the MAC-hs PDU will now be described with reference to Fig. 2.

Fig. 2 is a drawing showing the structure of a MAC-hs PDU carried through the HS-DSCH.

As shown in Fig. 2, the MAC-hs PDU includes a MAC-hs header field 210, a MAC-hs Service Data Unit (SDU) field 220 and a padding field 230. The MAC-hs header 210 includes various fields as follows.

(1) Version Flag (VF): a one-bit flag indicating the version of a communication system.

(2) Queue ID: a 3-bit field providing for the identification of a priority queue of the MAC-hs PDU 200. That is, the Queue ID is an identification of a reordering queue managed by the UE to support the HSDPA.

(3) Transmission Sequence Number (TSN): a 6-bit sequence number indicating the sequence of the transmission of the MAC-hs PDUs in the priority queue.

(4) SID_x: a 3-bit field indicating the size of the MAC-dedicated (MAC-d) PDUs belonging to the x-th set of concatenated MAC-d PDUs of the same size included in a MAC-hs PDU.

(5) N_x: a 7-bit field indicating the number of the MAC-d PDUs belonging to the x-th set of concatenated MAC-d PDUs of the same size.

(6) F (Flag): a one-bit flag indicating if the F field is the end of the current MAC-hs header. If the flag value is set to "1", it indicates that the F field is the end of the current MAC-hs header, followed by a MAC-hs SDU, and if the flag value is set to "0", it indicates that the F field is followed by an SID field.

As shown in Fig. 2, one MAC-hs PDU 200 may include a plurality of the MAC-hs SDUs 220. The MAC-hs payload includes a plurality of the MC-hs SDUs. In a HSDPA system, the length of a MAC-hs payload must be a multiple of 8 bits. Thus, the padding field 230 is added to the MAC-hs PDU 200 when the sum of the sizes of the MAC-hs payload and header is less than a transport block set size (i.e. the size of a transport block set transferred to an associated HS-SCCH).

In Fig. 2, the MAC-hs SDU 220 is transferred to the MAC-d entity so that the MAC-d header is removed, and is then transferred as the MAC-d SDU(s) (i.e. RLC PDU(s)) to the upper RLC layer. The MAC-hs SDU is the same as the MAC-d PDU. As shown in Fig. 2, each MAC-hs PDU includes a MAC-hs header of at least 21 bits as expressed by Equation 1.

$$\text{Length of MAC-hs header} = 10 + 11P \ (P=1,2,3...) \tag{1}$$

where P is the number of sets of SID, N and F fields.

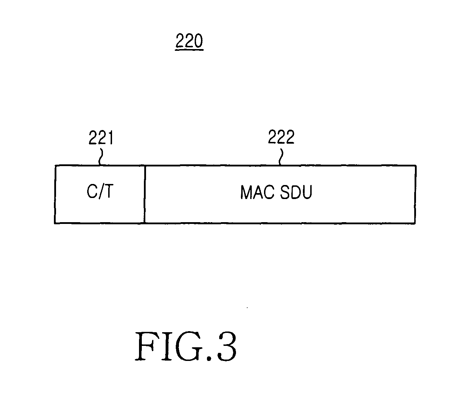

The MAC-d PDU, which is the MAC-hs SDU, is configured as shown in Fig. 3.

Fig. 3 is a diagram showing the configuration of a MAC-d PDU mapped to an HS-DSCH.

As shown in Fig. 3, each MAC-d PDU 220 includes a C/T field 221 and a MAC SDU 222. The C/T field 221 is used as an identification for a logical channel transmitted through the HS-DSCH. Each C/T field 221 is composed of 4 bits and can identify up to 15 logical channels.

A logical channel and a transport channel are generally mapped to a Radio Access Bearer (RAB) in packet switched data services provided by the W-CDMA system. However, as can be seen in the 3rd Generation Partnership Project (3GPP) TS34.108 specification, a plurality of Signaling Radio Bearers (SRBs) each have a number of respective logical channels which are mapped to the same transport channel. However, in the RAB structure introduced for the PS/CS ("Packet Switched/Circuit Switched") services, a logical channel is mapped to each RAB that is mapped to a stand-alone transport channel. The C/T field 221 can be used as an identification for each logical channel and can also be used as an identification for each radio bearer. The MAC SDU 220 is transferred to the upper layer.

In Fig. 3, the 4-bit C/T field in each MAC-d PDU may be present or not depending on whether or not multiplexing on the MAC is performed. Since the HSDPA does not operate in TM ("Transparent Mode") RLC mode due to the ciphering, the size of the MAC SDU (i.e., an RLC PDU) in Fig. 3 is a multiple of 8 bits. The size of each MAC-d PDU (MAC-hs SDU) can be expressed by Equation 2.

$$\text{Length of MAC-d PDU} = 8M + 4K \tag{2}$$

(M = 1, 2, ... integer; and K is 0 or 1)

In the HSDPA, the MAC layer processes a MAC-hs PDU received from the physical layer to produce RLC PDU(s) (i.e. MAC-d SDU(s)) and transfers the produced MAC-d SDU(s) to the upper RLC layer.

When multiplexing on MAC is applied, each of the MAC-hs SDUs (MAC-d PDUs) of a MAC-hs PDU includes a 4-bit C/T field. No logical channel multiplexing in the MAC-d entity has been introduced in the transport channel parameter set for the PS data proposed to support the conformance tests in the TS 34.108 specification. Only cases where no CT field is required have been introduced. In addition, even when the RAB for the PS data is set up so that a plurality of logical channels are mapped to the same transport channel (corresponding to the MAC-d flow in HSDPA), if the data frames are transferred in the same TTI from a MAC-d entity in an RNC to a MAC-hs entity in a Node B through an lub interface, it will be advantageous for the data frames transferred in the same TTI to be composed of the MAC-d PDUs received from one of the plurality of the logical channels, rather than a combination of the MAC-d PDUs received from the plurality of logical channels. Accordingly, all of the MAC-hs SDUs (MAC-d PDUs) carried through the same MAC-hs PDU need to have the same logical channel identity. It is thus unnecessary for all of the MAC-hs SDUs included in the same MAC-hs PDU to have their C/T fields. When the total number of MAC-hs SDUs included in a MAC-hs PDU is K, the MAC-hs PDU has an unnecessary overhead of 4K bits.

Further, the length of a MAC-hs header may not be a multiple of 8 bits, and also the length of a MAC-d PDU may not be a multiple of 8 bits due to the operation in the UM/AM ("Unacknowledged Mode/Acknowledge Mode") mode as a characteristic of the HSDPA services. Accordingly, the bit operations such as bit masking, bit stream copy and bit shifting, which lower the processing speed of the HSDPA service, must be implemented when the MAC layer in the UE system processes and converts the MAC-hs PDU to the MAC-d PDU(s) and also when the RLC layer processes the RLC PDU(s) extracted from the MAC-hs PDU to produce the RLC SDU(s).

As a result, when multiplexing on the MAC is applied, unnecessary overhead occurs since all of the MAC-hs SDUs included in the same MAC-hs PDU have C/T fields. In addition, if the length of the MAC-hs header is not a multiple of 8 bits, the corresponding HSDPA data is transferred to the upper layer through the bit operations that the lower processing speed. Further, due to the operation in the AM/UM mode as a characteristic of the HSDPA services, the MAC-hs SDU suggested in the current specifications cannot be a multiple of 8 bits when the logical channel multiplexing is performed in the MAC layer. Therefore, a special bit operation is required when an RLC PDU is extracted from the MAC-hs SDU.

Therefore, the present invention has been made in view of at least the above problems.

It is the object of the present invention to provide a method for improving the data processing speed in a mobile communication system employing a High Speed Downlink Packet Access (HSDPA) without requiring bit operations.

This object is solved by the subject matter of the independent claims.

Preferred embodiments are defined in the dependent claims.

It is an aspect of the present invention to provide a method for improving the data processing speed in a mobile communication system employing the HSDPA by modifying the structure of a MAC-hs PDU.

In accordance with the present invention, the above and other objects can be accomplished by the provision of a method for improving the data processing speed in a mobile communication system employing a High Speed Downlink Packet Access (HSDPA), the method comprising the steps of adding a field for identifying a destination logical channel to a header of a data unit for HSDPA services to be produced; and producing the data unit by inserting a header padding field into the header of the data unit and transmitting the produced data unit.

Generally, when multiplexing on MAC is applied, each MAC-hs SDU included in a MAC-hs PDU has a C/T field to indicate to which logical channel each MAC-hs SDU is mapped. However, all of the MAC-d PDUs included in the same MAC-hs PDU are mapped to the same logical channel. Accordingly, a single C/T field can express the destination logical channel of all of the MAC-d PDUs carried through the same MAC-hs PDU. For this reason, in the present invention, only one C/T field is added to an end portion of the MAC-hs header of a MAC-hs PDU, instead of attaching C/T fields to all of the MAC-d PDUs included in the MAC-hs PDU. According to the present invention, instead of reading the respective C/T fields of all of the MAC-d PDUs included in a MAC-hs PDU, the UE needs to only read one C/T field for the MAC-hs PDU to obtain the same results, thereby increasing the processing speed of the UE for transferring the data carried in the MAC-hs PDU to the upper layer.

According to the present invention, one MAC-hs header includes a small number of C/T fields (optimally, one C/T field), and in addition, header padding is optionally added to the MAC-hs header so that the length of the MAC-hs header becomes a multiple of 8 bits. This allows the starting point of each MAC-hs SDU and the MAC-hs header to be byte-aligned in a bit stream of the MAC-hs PDU, so that the UE can process the MAC-hs PDU more rapidly in order to transfer the HSDPA data carried in the MAC-hs PDU to the upper layer, thereby increasing the overall speed of providing the HSDPA services.

The above object and other aspects, features and other advantages of the present invention will be more clearly understood from the following detailed description taken in conjunction with the accompanying drawings, in which:

Fig. 1 is a block diagram showing the structure of a conventional mobile communication system;
Fig. 2 is a drawing showing the structure of a data block (i.e., a MAC-hs PDU) carried through a High Speed-Physical Downlink Shared Channel (HS-DSCH);
Fig. 3 is a diagram showing the structure of each MAC-hs SDU included in the MAC-hs PDU of Fig. 2;
Fig. 4 is a diagram showing MAC layer architecture of a general communication system employing a HSDPA;
Fig. 5 is a block diagram showing the configuration of a MAC-hs entity in a Node B according to an embodiment of the present invention;
Fig. 6 is a drawing showing the structure of a MAC-hs PDU in a communication system employing a HSDPA according to an embodiment of the present invention;
Fig. 7 is a control flow chart showing how a MAC-hs PDU is transmitted from a UTRAN in a communication system employing a HSDPA according to an embodiment of the present invention; and
Fig. 8 is a control flow chart showing how a MAC-hs PDU is received by a UE in a communication system employing a HSDPA according to an embodiment of the present invention.

Now, preferred embodiments of the present invention will be described in detail with reference to the annexed drawings. In the following description, only elements or functions required to understand the present invention will be described, and a detailed description of other elements or functions will be omitted when it may obscure the subject matter of the present invention.

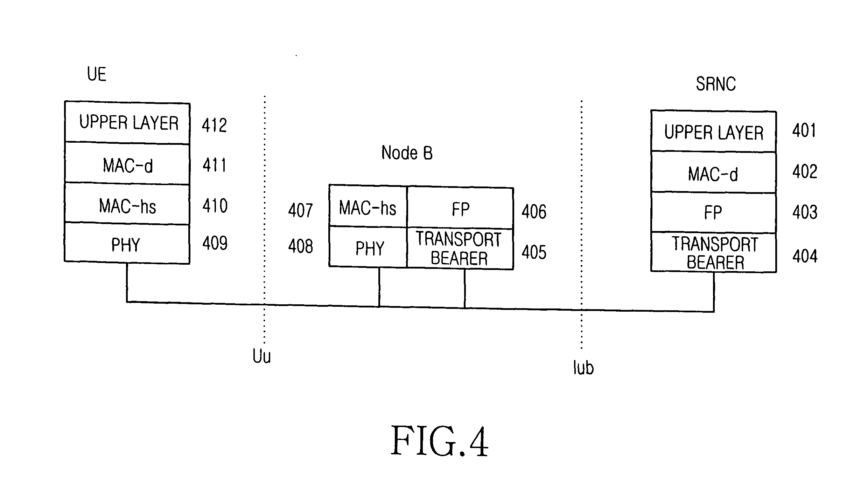

First, a protocol stack of an HSDPA communication system will be described with reference to Fig. 4.

Fig. 4 is a diagram showing MAC layer architecture of a communication system employing the HSDPA scheme to which the present invention is applied.

The MAC layer is composed of a MAC-d layer and a MAC-hs layer. As shown in Fig. 4, the MAC layer includes a MAC-d layer 411 and a MAC-hs layer 410 at the UE; a MAC-hs layer 407 at the Node B; and a MAC-d layer 402 at the SRNC. The MAC-d layer, which is a MAC entity for processing dedicated logical channels, performs the MAC functions for the dedicated logical channels such as the dedicated control channels (DCCH) and the dedicated traffic channels (DTCH). The MAC-hs layer is additionally implemented to support HSDPA, which primarily provides functions for HARQ on the HS-DSCH to support HSDPA.

As shown in Fig. 4, when the actual user data is transferred from an upper layer 401 to the MAC-d layer 402, the MAC-d layer 402 produces a MAC-d PDU corresponding to the user data received from the upper layer 401, and transfers the produced MAC-d PDU to the Frame Protocol (FP) layer 403. The MAC-d PDU is produced by adding a MAC-d header to the user data received from the upper layer 401, and the MAC-d header includes multiplexing-related information indicating to which upper layer the MAC-d PDUs are to be transferred at the receiving side. The FP layer 403 converts the MAC-d PDUs received from the MAC-d layer 402 to a FP frame, and transfers the FP frame to a transport bearer layer 404. The FP layer 403 associates multiple MAC-d PDUs with one FP frame that includes the priority information of the associated MAC-d PDUs. The transport bearer layer 404 allocates a transport bearer to the FP frames received from the FP layer 403 and transfers the FP frames to a transport bearer layer 405 in the Node B using the allocated transport bearer. The SRNC transport bearer layer 404 and the Node B transport bearer layer 405 interface with each other via the Iub interface between the SRNC and the Node B. The transport bearer layer 404 is responsible for the actual data transmission between the SRNC and the Node B, and may be implemented based on a AAL2/ATM (ATM Adaptation Layer 2/Asynchronous Transfer Mode") system or the like.

When receiving an FP frame from the SRNC transport bearer layer 404, the Node B transport bearer layer 405 transfers the received FP frame to the FP layer 406, and the FP layer 406 transfers the FP frame received from the transport bearer 405 to the MAC-hs layer 407. With reference to the priority information included in the FP frame received from the FP layer 406, the MAC-hs layer 407 stores the received MAC-d PDUs in a corresponding priority queue.

When a radio bearer, to which the multiplexing of the logical channels mapped to the HS-DSCH channel in the MAC layer is applied, is set up, and when the MAC-hs layer 407 in the Node B forms a MAC-hs PDU for HSDPA services, the MAC-hs layer 407 adds a C/T field, indicating a destination logical channel for each MAC-d PDU of the MAC-hs PDU, to an end portion of the MAC-hs header of the MAC-hs PDU, and also adds a header padding field to the end portion of the MAC-hs header with the C/T field added thereto so that the length of the MAC-hs header becomes a multiple of 8 bits. If the length of the MAC-hs header, composed of the VF, the Queue ID and the TSN fields, sets of the SID, the N and the F fields and a C/T field, is a multiple of 8 bits, the Node B MAC-hs layer 407 does not add the header padding field to the MAC-hs header. The length of the header padding field to be added is selected from 0 to 7 bits so that the length of the MAC-hs header becomes a multiple of 8 bits.

When the UE receives a MAC-hs PDU, the UE decodes a MAC-hs header of the received MAC-hs PDU and transfers MAC-d PDU(s), byte-aligned in the MAC-hs PDU, to an upper layer. The MAC layer of the UE determines the total length of the effective fields (VF, Queue ID, TSN, SIDs, Ns, Fs and C/T) of the MAC-hs header. If the effective field length of the MAC-hs header is a multiple of 8 bits, the MAC layer of the UE transfers the MAC-d PDU(s) subsequent to the C/T field to the upper RLC layer. If the effective field length of the MAC-hs header is not a multiple of 8 bits, the MAC layer of the UE determines that the C/T field is followed by a header padding field of one of the 1 to 7 bits corresponding to the determined effective field length. The MAC layer then handles a portion of the MAC-hs PDU, which starts with the first bit of the MAC-hs PDU and ends with an 8m-th (m=1,2,3...) bit thereof immediately after the C/T field, as a MAC-hs header. Thereafter, a data portion of the MAC-hs PDU, which starts with a bit immediately after the MAC-hs header portion, is recognized and handled as MAC-d PDU(s). Here, the identity of a logical channel, to which all MAC-d PDUs carried in the same MAC-hs PDUs are mapped, is confirmed by referring to only the single C/T field added to the MAC-hs header. Since the MAC-hs SDU(s) (i.e. the MAC-d PDU(s)) have already been byte-aligned in a bit stream of the MAC-hs PDU as a natural result of the method according to the present invention, the MAC layer extracts the MAC-d PDU(s) and the RLC layer forms the RLC SDU(s) without the bit operations.

A description will now be given of the configuration of a MAC-hs entity 407 in the Node B according to an embodiment of the present invention.

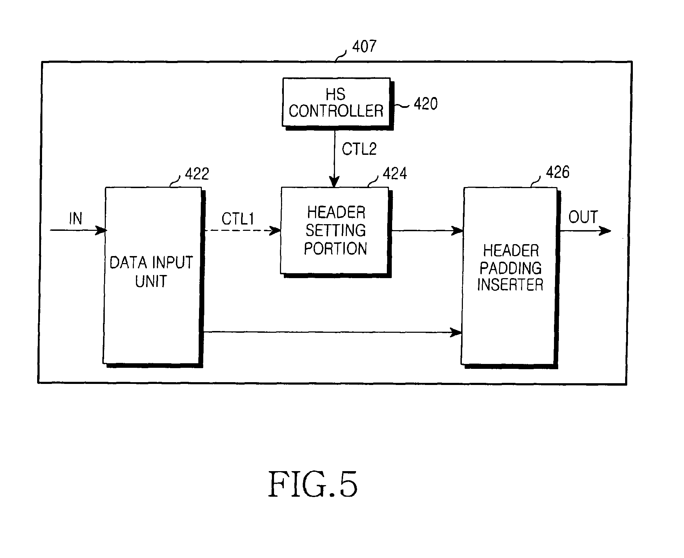

Fig. 5 is a block diagram showing the configuration of the MAC-hs entity 407 in the Node B according to the embodiment of the present invention. As shown in Fig. 5, the MAC-hs entity 407 in the Node B according to the embodiment of the present invention receives MAC Service Data Units (SDUs) frames from the MAC-d entity 402 in the RNC 111 or 112 as described above, and produces a MAC-hs PDU according to the present invention. To accomplish this, the MAC-hs entity 407 includes an HS controller 420, a data input unit 422, a header setting portion 424 and a header padding inserter 426.

The HS controller 420 manages the MAC-hs PDU scheduling information such as the TSNs ("Transmit Sequence Number") and the Queue IDs to form MAC-hs PDUs, and provides the MAC-hs PDU scheduling information to the header setting portion 424. The HS controller 420 also provides a representative C/T field value of the MAC-d PDU(s) transferred to an associated Frame Protocol (FP) frame and control information (CTL2) to the header setting portion 424.

The data input unit 422 receives input data IN from the MAC-d entity 402 in the RNC 111 or 112. The input data IN received from the MAC-d entity 402 is a data stream of concatenated MAC-d PDUs, which includes an FP header. The data input unit 422 removes the FP header from the input data IN to produce a set of MAC-hs SDUs composed of MAC-d PDUs. The data input unit 422 provides control information such as SID, N and F for forming the corresponding MAC-hs PDU to the header setting portion 424. The above description of Fig. 2 can be referred to for a description of the SID, N and F. Specifically, the data input unit 422 provides information (CTL1) related to the MAC-d PDU block size, such as the number of the sequential MAC-d PDUs of a specific block size and the block size of the MAC-d PDUs included in the input data IN, to the header setting portion 424. The data input unit 422 provides the produced MAC-hs SDU set composed of MAC-d PDUs to the header padding inserter 426. Using the control information (CTL1 and CTL2) from the data input unit 422 and the HS controller 420, the header setting portion 424 produces a MAC-hs header, which is composed of the VF, the Queue ID and the TSN fields and sets of the SID, the N and the F fields and also a representative C/T field according to the present invention, and provides the produced MAC-hs header to the header padding inserter 426.

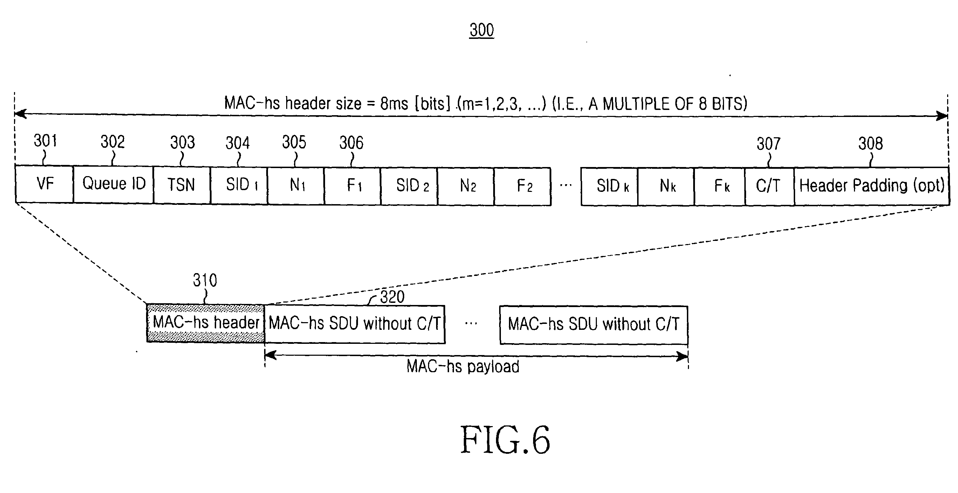

When receiving a MAC-hs header 310 as shown in Fig. 6 from the header setting portion 424, the header padding inserter 426 determines if the length of effective fields of the MAC-hs header 310 is a multiple of 8 bits. If the effective field length of the MAC-hs header 310 is a multiple of 8 bits, the header padding inserter 426 produces a MAC-hs PDU using the MAC-hs header received from the header setting portion 424 and the set of MAC-hs SDUs received from the data input unit 422.

If the effective field length of the MAC-hs header 310 is not a multiple of 8 bits, the header padding inserter 426 determines a length of the header padding field 308 that allows the length of the MAC-hs header 310 to be a multiple of 8 bits, and then adds the header padding field 308 having the determined length to the MAC-hs header 310. The header padding inserter 426 then produces a MAC-hs PDU using the set of MAC-hs SDUs received from the data input unit 422 and the MAC-hs header with the header padding field inserted therein. The header padding inserter 426 may add padding to the set of MAC-hs SDUs received from the data input unit 422. The structure of a MAC-hs PDU according to an embodiment of the present invention will now be described with reference to Fig. 6.

Fig. 6 is a drawing showing the structure of a MAC-hs PDU in a communication system employing a HSDPA according to an embodiment of the present invention.

As shown in Fig. 6, the MAC-hs PDU 300 includes a MAC-hs header field 310, MAC-hs SDU fields 320 and a padding field 330. The MAC-hs SDU and padding fields 320 and 330 have the same configuration as in the prior art, and a detailed description thereof will thus be omitted.

The size of the MAC-hs header 310 in the MAC-hs PDU 300 is a multiple of 8 bits, i.e., 8m bits (m= 1,2,3...), as shown in Fig. 6. The MAC-hs header 310 includes a VF (Version Flag) field 301, a Queue ID field 302, a TSN field 303, SID_x fields 304, N_x fields 305, F_x (Flag) fields 306, a C/T field 307 and a header padding field 308.

As described above, the C/T field 307 provides the identification of the destination logical channel for each MAC-d PDU. The MAC-d PDUs included in the same MAC-hs PDU are all mapped to the same logical channel. Accordingly, a single C/T field can contain the destination logical channel of all of the MAC-d PDUs carried through the same MAC-hs PDU. For this reason, the MAC-hs layer 407 in the Node B adds only one C/T field to an end portion of the MAC-hs header of a MAC-hs PDU, instead of attaching C/T fields to all of the MAC-d PDUs included in the MAC-hs PDU.

When the MAC-hs layer 407 in the Node B forms a MAC-hs PDU for the HSDPA services, the header padding field 308 is added to a MAC-hs header of the MAC-hs PDU so that the length of the MAC-hs header becomes a multiple of 8 bits. If the length of the MAC-hs header, composed of the VF, the Queue ID and the TSN fields, sets of the SID, the N and the F fields and a C/T field, is a multiple of 8 bits, the Node B MAC-hs layer 407 does not add the header padding field 308 to the MAC-hs header. The length of the header padding field 308 to be added is selected from 0 to 7 bits so that the length of the MAC-hs header becomes a multiple of 8 bits.

When the UE receives a MAC-hs PDU, the UE decodes a MAC-hs header of the received MAC-hs PDU and transfers the MAC-d PDU(s), byte-aligned in the MAC-hs PDU, to an upper layer. Here, the MAC layer of the UE determines the total length of the effective fields (VF, Queue ID, TSN, SIDs, Ns, Fs and C/T) of the MAC-hs header. If the effective field length of the MAC-hs header is a multiple of 8 bits, the MAC layer of the UE transfers MAC-d PDU (s) subsequent to the C/T field to the upper RLC layer. If the effective field length of the MAC-hs header is not a multiple of 8 bits, the MAC layer of the UE determines that the C/T field is followed by a header padding field of one of the 1 to 7 bits corresponding to the determined effective field length. The MAC layer then handles a portion of the MAC-hs PDU, which starts with the first bit of the MAC-hs PDU and ends with an 8m-th (m=1,2,3...) bit thereof immediately after the C/T field, as a MAC-hs header. Thereafter, the MAC layer of the UE recognizes and handles a data portion of the MAC-hs PDU, which starts with a bit immediately after the MAC-hs header portion, as the MAC-d PDU(s). Here, the identity of a logical channel, to which all of the MAC-d PDUs carried in the same MAC-hs PDUs are mapped, is confirmed by referring to only the single C/T field added to the MAC-hs header. Since the MAC-hs SDU(s) (i.e. the MAC-d PDU(s)) have already been byte-aligned in a bit stream of the MAC-hs PDU as a natural result of the method according to the present invention, the MAC layer extracts the MAC-d PDU(s), and the RLC layer forms the RLC SDU (s) without the formerly necessary bit operations.

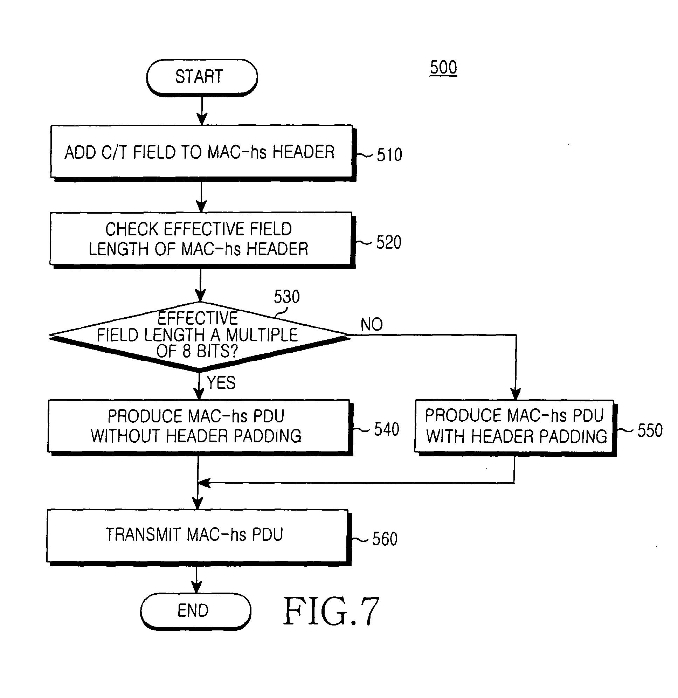

A description will now be given of the operation of the MAC-hs layer 407 of the Node B. Fig. 7 is a flow chart showing the operation of the MAC-hs layer 407 of the Node B in Fig. 4.

As shown in Fig. 7, when forming a MAC-hs PDU for the HSDPA services, the MAC-hs layer 407 of the Node B adds a C/T field to a MAC-hs header 310 of the MAC-hs PDU at step 510. The MAC-hs layer 407 then determines the effective field length of the MAC-hs header 310 at step 520. The MAC-hs layer 407 of the Node B then determines, at step 530, if the effective field length of the MAC-hs header 310 is a multiple of 8 bits. If the effective field length is a multiple of 8 bits, the MAC-hs layer 407 moves to step 540 to produce a MAC-hs PDU without a header padding field 308, and then moves to step 560. If the effective field length is not a multiple of 8 bits, the MAC-hs layer 407 moves to step 550. At step 550, the MAC-hs layer 407 determines a length of a header padding field 308 that allows the length of the MAC-hs header 310 to be a multiple of 8 bits, and adds the header padding field 308 having the determined length to the MAC-hs header 310 to produce a MAC-hs PDU, and then moves to step 560. At step 560, the MAC-hs layer 407 of the Node B transmits the produced MAC-hs PDU to the UE.

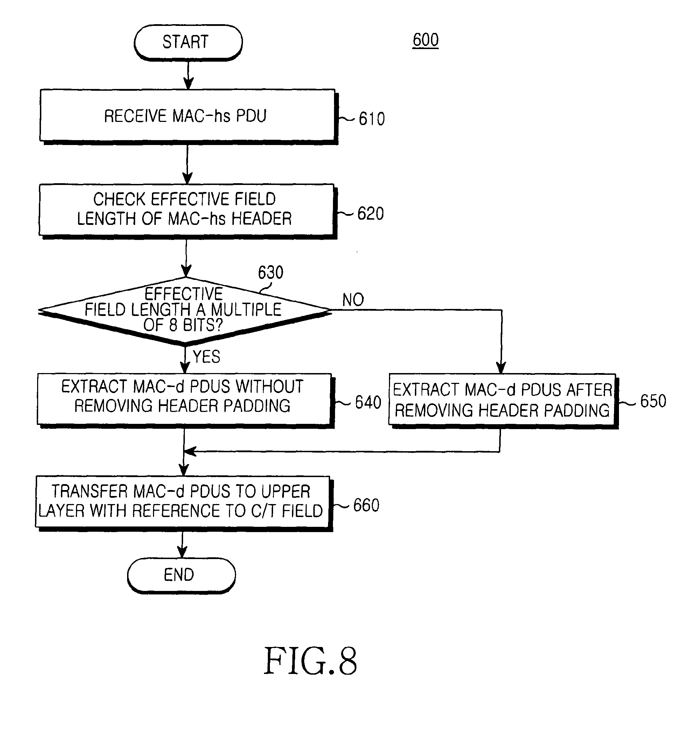

Next, the operation of the MAC-hs layer 410 of the UE when receiving the MAC-hs PDU from the Node B will be described with reference to Fig. 8. Fig. 8 is a flow chart showing the operation of the MAC-hs layer 410 of the UE in Fig. 4.

As shown in Fig. 8, when the MAC-hs layer 410 of the UE receives a MAC-hs PDU from the Node B at step 610, the layer 410 moves to step 620 to determine the effective field length of a MAC-hs header 310 of the received MAC-hs PDU. Then, at step 630, the MAC-hs layer 410 of the UE determines if the effective field length of the MAC-hs header 310 is a multiple of 8 bits. If the effective field length of the MAC-hs header 310 is a multiple of 8 bits, the MAC-hs layer of the UE moves to step 640 to extract the MAC-d PDU(s) from the received MAC-hs PDU without the need to remove a header padding field 308 from the MAC-hs header 310. Alternatively, the MAC-hs layer 410 of the UE moves to step 650 to extract MAC-d PDU(s) after removing the header padding field 308 from the MAC-hs header 310. More specifically, the MAC layer 410 of the UE determines the total length of the effective fields (VF, Queue ID, TSN, SIDs, Ns, Fs and C/T) of the MAC-hs header 310, and if the effective field length of the MAC-hs header is a multiple of 8 bits, the MAC layer 410 extracts the MAC-d PDU(s) subsequent to the C/T field. If the effective field length of the MAC-hs header 310 is not a multiple of 8 bits, the MAC layer 410 of the UE determines that the C/T field is followed by a header padding field 308 of one of the 1 to 7 bits corresponding to the determined effective field length. The MAC layer 410 then recognizes and handles a portion of the MAC-hs PDU, which starts with the first bit of the MAC-hs PDU and ends with an 8m-th (m=1,2,3...) bit thereof immediately after the C/T field, as a MAC-hs header. Thereafter, the MAC layer 410 of the UE recognizes and handles a data portion of the MAC-hs PDU, which starts with a bit immediately after the MAC-hs header, as MAC-d PDU(s). Then, at step 660, the MAC-hs layer 410 of the UE transfers the extracted MAC-d PDU(s) to the upper layer. The identity of a logical channel, to which all of the MAC-d PDUs carried in the same MAC-hs PDUs are mapped, is confirmed by referring to only the single C/T field added to the MAC-hs header. Since the MAC-hs SDU(s) (i.e. the MAC-d PDU(s)) have already been byte-aligned in a bit stream of the MAC-hs PDU as a natural result of the method according to the present invention, the MAC layer extracts the MAC-d PDU(s), and the RLC layer forms the RLC SDU(s) without the formerly required bit operations.

As apparent from the above description, the present invention provides a mobile communication system employing a High Speed Downlink Packet Access (HSDPA) and a method for improving the data processing speed in the same. When logical channel multiplexing is performed on the HS-DSCH in the MAC layer, a 4-bit C/T field and a header padding field are added to the MAC-hs header to minimize the number of bits required for signaling of logical channels to which the MAC-d PDUs included in the same MAC-hs PDU are respectively mapped, so that the MAC-hs PDU can carry a greater amount of user data. In addition, since each of the MAC-d PDUs included in the MAC-hs PDU do not include a C/T field, the processing speed of the MAC layer in the UE for processing the PDUs is increased. Header padding is also performed to allow the MAC-d PDUs to be automatically byte-aligned in a bit stream of the MAC-hs PDU, so that memory management is accelerated and simplified when the MAC layer extracts the MAC-d PDU(s) from the MAC-hs PDU, and the RLC layer forms the RLC SDU(s), thereby providing more improved HSDPA services.

In the aforementioned description of the present invention, a detailed embodiment has been described. However, various modifications can be made without departing from the scope of the present invention. For example, since the aforementioned embodiment is applied to a mobile communication system using an HSDPA, only a downlink of a terminal has been considered. However, the present invention can be applied to all mobile communication systems. Accordingly, when the present invention is applied to a mobile communication system in which data are actually transmitted/received on a downlink and an uplink of a terminal, it is apparent to those who skilled in the art that the present invention can also be applied to the uplink of the terminal. Consequently, the scope of the invention must be defined by the accompanying claims.

Although the preferred embodiments of the present invention have been disclosed for illustrative purposes, those skilled in the art will appreciate that various modifications, additions and substitutions are possible, without departing from the scope of the invention as disclosed in the accompanying claims.

**Claims**

1.  A method for improving a data processing speed in a mobile communication system employing a high speed downlink packet access, the method comprising the steps of:

    a) adding to a header of a data unit for high speed downlink packet access services a control/traffic field for identifying a destination logical channel; and
    b) generating the data unit by inserting a header padding field into the header of the data unit, and transmitting the generated data unit.

2.  The method according to claim 1, wherein the header padding field is inserted into an end portion of the header of the data unit.

3.  The method according to claim 1, wherein at least one control/traffic field is added and the control/traffic field has no repeated equal value.

4.  The method according to claim 1, further comprising the step of:

    c) determining if the header padding field is to be inserted into the header of the data unit.

5.  The method according to claim 4, wherein step c) includes the steps of:

    c-1) determining an effective field length of the header of the data unit; and
    c-2) determining if the effective field length of the header of the data unit is a multiple of n bits so that the effective field length of the header can be divided on the same basis as the length of a payload of the data unit.

**EP 1 566 925 A2**

6. The method according to claim 4, wherein step b) includes the step of inserting the header padding field into the header of the data unit, the length of the header padding field adjusting the total length of the header to be a multiple of 8 bits.

7. The method according to claim 5, wherein n equals 8.

8. The method according to claim 5, wherein when receiving the data unit, user equipment determines if the effective field length of the header of the received data unit is a multiple of n bits.

9. The method according to claim 8, wherein if the effective field length of the received data unit is not a multiple of n bits, the user equipment extracts the payload of the received data unit after removing the header padding field from the header of the received data unit, and transfers the extracted payload to an upper layer while referencing the field for identifying the destination logical channel.

10. The method according to claim 8, wherein if the effective field length of the received data unit is a multiple of n bits, the user equipment extracts the payload of the received data unit subsequent to the header thereof, and transfers the extracted payload to an upper layer while referencing the field for identifying the destination logical channel.

11. The method according to one of claims 1 to 10, wherein only one field for identifying the destination logical channel is inserted into the header of the data unit at a position before the header padding field.

12. The method according to one of claims 1 to 11, wherein the field for identifying the destination logical channel is inserted into the header of the data unit at a position before the header padding field, and the inserted field provides the identification of the destination logical channel of all data items included in the data unit.

13. A method for setting up a radio resource for high speed downlink packet access services, wherein a data frame for a high speed downlink packet access transferred from a serving radio network controller to a Node B is composed of RLC PDUs received from one of a plurality of logical channels, which are multiplexed, in a corresponding transmission time interval.

14. A method for setting up a radio resource for high speed downlink packet access services, wherein a data frame for a high speed downlink packet access transferred from an serving radio network controller to a Node B is composed of RLC PDUs received from the same logical channel in a corresponding Transmission Time Interval transmission time interval.

15. A mobile communication system employing high speed downlink packet access, comprising:

   a Node B for generating a data unit for high speed downlink packet access services by adding a control/traffic field for identifying a destination logical channel to a header of the data unit and inserting a header padding field into the header of the data unit, and transmitting the generated data unit.

16. The system according to claim 15, wherein only one field for identifying the destination logical channel is inserted into the header of the data unit at a position before the header padding field.

17. The system according to claim 15, wherein at least one control/traffic field is added and the control/traffic field does not repeatedly have an equal value.

18. The system according to claim 15, wherein the Node B includes:

   a header setting portion for receiving control information for the header of the data unit, and generating and outputting the header of the data unit including the field for identifying the destination logical channel; and
   a header padding inserter for determining if a header padding field is to be inserted into the header of the data unit received from the header setting portion, and inserting the header padding field into the header of the data unit based on the determination.

19. The system according to claim 18, wherein the header padding inserter checks an effective field length of the header of the data unit, and determines whether the effective field length of the header of the data unit is a multiple of n bits so that the effective field length of the header can be divided on the same basis as the length of a payload of the data unit.

20. The system according to claim 19, wherein if the effective field length of the header is not a multiple of n bits, the header padding inserter produces the data unit by inserting a header padding field into the header of the data unit adjusting the total length of the header to be a multiple of n bits, and

wherein if the effective field length of the header is a multiple of n bits, the header padding inserter produces the data unit using the header of the data unit received from the header setting portion without inserting a header padding field into the header.

21. The system according to one of claims 15 to 20, further comprising:

user equipment for receiving the data unit, and determining if the effective field length of the header of the received data unit is a multiple of n bits.

22. The system according to claim 21, wherein if the effective field length of the received data unit is not a multiple of n bits, the user equipment extracts the payload of the received data unit after removing the header padding field from the header of the received data unit, and transfers the extracted payload to an upper layer, and

wherein if the effective field length of the received data unit is a multiple of n bits, the user equipment extracts the payload of the received data unit without removing the header padding field from the header of the received data unit, and transfers the extracted payload to the upper layer.

23. The system according to one of claims 18 to 22, wherein the header setting portion and the header padding inserter are implemented in a MAC layer of the Node B.

24. The system according to one of claims 19 to 22, wherein n equals 8.

25. A data transmission method in a mobile communication system, the data transmission method comprising the steps of:

a) generating a transmission data unit including one control/traffic field for identifying a destination logical channel of at least one service data unit when generating the transmission data unit including said at least one service data unit; and
b) transmitting the transmission data unit.

26. The data transmission method according to claim 25, wherein said one control/traffic field is included in a header of the transmission data unit.

27. The data transmission method according to claim 25 or 26, wherein step a) comprises the steps of:

generating a header including the control/traffic field; and
generating a payload by combining said at least one service data unit with each other without each control/traffic field of the service data unit.

28. The data transmission method according to one of claims 25 to 27, wherein said at least one service data unit has a mapping relation with an equal logical channel.

29. The data transmission method according to one of claims 25 to 28, wherein an apparatus receiving the transmission data unit identifies the destination logical channel of said at least one service data unit after viewing said one control/traffic field included in the transmission data unit.

30. The data transmission method according to one of claims 25 to 29, comprising a step of generating a transmission data unit including at least two other control/traffic fields for identifying the destination logical channel of said at least one service data unit, wherein the control/traffic fields do not repeatedly have an equal value.

31. A data transmission apparatus in a mobile communication system, the data transmission apparatus comprising:

a) a transmission data unit generator for generating a transmission data unit including one control/traffic field for identifying a destination logical channel of at least one service data unit when generating the transmission data unit including said at least one service data unit; and

b) a transmitter for transmitting the transmission data unit.

32. The data transmission apparatus according to claim 31, wherein said one control/traffic field is included in a header of the transmission data unit.

33. The data transmission apparatus according to claim 31 or 32, wherein the transmission data unit generator generates a header including the control/traffic field and generates a payload by combining said at least one service data unit with each other without each control/traffic field of the service data unit.

34. The data transmission apparatus according to one of claims 31 to 33, wherein said at least one service data unit has a mapping relation with an equal logical channel.

35. The data transmission apparatus according to one of claims 31 to 34, wherein an apparatus receiving the transmission data unit identifies the destination logical channel of said at least one service data unit after viewing said one control/traffic field included in the transmission data unit.

36. The data transmission apparatus according to one of claims 31 to 35, wherein the transmission data unit generator generates a transmission data unit including at least two other control/traffic fields for identifying the destination logical channel of said at least one service data unit, and the control/traffic fields do not repeatedly have an equal value.

FIG.1

EP 1 566 925 A2

200

| VF | Queue ID | TSN | SID $_1$ | N $_1$ | F $_1$ | SID $_2$ | N $_2$ | F $_2$ | $\cdots$ | SID $_k$ | N $_k$ | F $_k$ |

201  202  203  204  205  206

| MAC-hs header | MAC-hs SDU | $\cdots$ | MAC-hs SDU | Padding (opt) |

210  220  230

MAC-hs payload

FIG.2

<u>220</u>

221                     222

| C/T | MAC SDU |
|-----|---------|

# FIG.3

UE

| UPPER LAYER | 412 |
|---|---|
| MAC-d | 411 |
| MAC-hs | 410 |
| PHY | 409 |

Node B

| 407 | MAC-hs | FP | 406 |
|---|---|---|---|
| 408 | PHY | TRANSPORT BEARER | 405 |

SRNC

| UPPER LAYER | 401 |
|---|---|
| MAC-d | 402 |
| FP | 403 |
| TRANSPORT BEARER | 404 |

Uu

Iub

# FIG.4

407

| HS CONTROLLER | 420 |

CTL2

| 422 |

IN → | DATA INPUT UNIT | CTL1 → | HEADER SETTING PORTION | 424 → | HEADER PADDING INSERTER | 426 → OUT

FIG.5

300

MAC-hs header size = 8ms [bits] (m=1,2,3, ...) (I.E., A MULTIPLE OF 8 BITS)

| 301 | 302 | 303 | 304 | 305 | 306 | | | | 307 | 308 |
|-----|-----|-----|-----|-----|-----|-----|-----|-----|-----|-----|
| VF | Queue ID | TSN | $SID_1$ | $N_1$ | $F_1$ | $SID_2$ | $N_2$ | $F_2$ | ··· | $SID_k$ | $N_k$ | $F_k$ | C/T | Header Padding (opt) |

310

320

| MAC-hs header | MAC-hs SDU without C/T | ··· | MAC-hs SDU without C/T |

MAC-hs payload

FIG.6

EP 1 566 925 A2

500

```
                    ┌─────────────┐
                    │    START    │
                    └──────┬──────┘
                           │
                           ▼
        ┌──────────────────────────────────┐
        │  ADD C/T FIELD TO MAC-hs HEADER   │ ─── 510
        └──────────────────┬───────────────┘
                           │
                           ▼
        ┌──────────────────────────────────┐
        │      CHECK EFFECTIVE FIELD         │ ─── 520
        │      LENGTH OF MAC-hs HEADER       │
        └──────────────────┬───────────────┘
                           │
                           ▼       530
                  ╱─────────────────╲
                 ╱     EFFECTIVE      ╲  NO
                ◁  FIELD LENGTH A MULTIPLE ▷────────────┐
                 ╲    OF 8 BITS?      ╱                  │
                  ╲─────────────────╱                    │
                           │ YES                          │
                           ▼                              ▼
        ┌──────────────────────────┐      ┌──────────────────────────┐
        │    PRODUCE MAC-hs PDU     │ 540  │    PRODUCE MAC-hs PDU     │ 550
        │   WITHOUT HEADER PADDING  │      │    WITH HEADER PADDING    │
        └──────────────┬───────────┘      └──────────────┬───────────┘
                       │◄─────────────────────────────────┘
                       ▼
        ┌──────────────────────────┐
        │    TRANSMIT MAC-hs PDU    │ ─── 560
        └──────────────┬───────────┘
                       │
                       ▼
                ┌─────────────┐
                │     END      │      FIG.7
                └─────────────┘
```

600

```
          ┌───────────┐
          │   START   │
          └─────┬─────┘
                │
                ▼
    ┌───────────────────────────┐
    │    RECEIVE MAC-hs PDU      │~ 610
    └─────────────┬─────────────┘
                  │
                  ▼
    ┌───────────────────────────┐
    │    CHECK EFFECTIVE FIELD   │~ 620
    │  LENGTH OF MAC-hs HEADER   │
    └─────────────┬─────────────┘
                  │
                  ▼         630
              ╱─────────╲
             ╱ EFFECTIVE ╲
      ╱─────────────────────────╲   NO
     ╱  FIELD LENGTH A MULTIPLE   ╲────────────────────┐
      ╲        OF 8 BITS?        ╱                      │
       ╲─────────────────────────╱                      │
              ╲─────────╱                               │
                  │ YES                                 │
                  ▼                                     ▼
    ┌───────────────────────────┐        ┌───────────────────────────┐
    │ EXTRACT MAC-d PDUS WITHOUT │~ 640   │ EXTRACT MAC-d PDUS AFTER   │~ 650
    │  REMOVING HEADER PADDING   │        │  REMOVING HEADER PADDING   │
    └─────────────┬─────────────┘        └─────────────┬─────────────┘
                  │◄──────────────────────────────────┘
                  ▼
    ┌───────────────────────────┐
    │ TRANSFER MAC-d PDUS TO UPPER│~ 660
    │LAYER WITH REFERENCE TO C/T FIELD│
    └─────────────┬─────────────┘
                  │
                  ▼
          ┌───────────┐
          │    END    │
          └───────────┘
```

# FIG.8